# EUROPÄISCHE PATENTSCHRIFT

(11) **EP 1 287 061 B1**
(45) Veröffentlichungstag und Bekanntmachung des Hinweises auf die Patenterteilung: **28.06.2006**
(21) Anmeldenummer: 01931637.1
(22) Anmeldetag: 23.04.2001
(51) Int. Cl.: C08K 3/22, G02B 5/20

(54) **IR-ABSORBIERENDE ZUSAMMENSETZUNGEN**
IR-ABSORBING COMPOSITIONS
COMPOSITIONS ABSORBANT LE RAYONNEMENT INFRAROUGE

(30) Priorität: 05.05.2000 DE 10022037
(43) Veröffentlichungstag der Anmeldung: 05.03.2003
(60) Teilanmeldung: 06007505.8
(73) Patentinhaber: Leibniz-Institut für Neue Materialien gemeinnützige GmbH, 66123 Saarbrücken (DE)
(72) Erfinder: DÖBLER, Martin, 40593 Düsseldorf (DE); HOHEISEL, Werner, 51061 Köln (DE); SCHMIDT, Helmut, 66130 Saarbrücken (DE); NONNINGER, Ralph, 66129 Saarbrücken (DE); SCHICHTEL, Martin, 66125 Saarbrücken (DE); JOST, Martin, 66113 Saarbrücken (DE)
(74) Vertreter: Barz, Peter
(86) Internationale Anmeldenummer: PCT/EP2001/004548
(87) Internationale Veröffentlichungsnummer: WO 2001/085833

(56) Entgegenhaltungen:
- US-A- 5 807 511
- DATABASE WPI Section Ch, Week 199719 Derwent Publications Ltd., London, GB; Class A60, AN 1997-209595 XP002173525 -& JP 09 059591 A (NIPPON SHOKUBAI CO LTD) , 4. März 1997 (1997-03-04)

## Beschreibung

Die vorliegende Erfindung betrifft Zusammensetzungen enthaltend transparente thermoplastische Polymere und oberflächenmodifizierte Oxidteilchen mit einer Teilchengröße von weniger als 200 nm und organische NIR-Absorber sowie deren Herstellung, deren Verwendung und daraus hergestellte Erzeugnisse.

Verscheibungen aus Zusammensetzungen enthaltend transparente thermoplastische Polymere wie z.B. Polycarbonat bieten für den Automobilbereich und für Gebäude viele Vorteile gegenüber herkömmlichen Verscheibungen aus Glas, wie z.B. erhöhte Bruchsicherheit oder Gewichtsersparnis. Im Falle von Automobilverscheibungen erreicht man dadurch eine höhere Insassensicherheit bei Verkehrsunfällen und durch die Gewichtserspamis einen niedrigeren Kraftstoffverbrauch. Schließlich lassen transparente thermoplastische Polymere und Zusammensetzungen, die transparente thermoplastische Polymere enthalten, aufgrund der einfacheren Formbarkeit eine wesentlich größere Designfreiheit zu.

Allerdings führt die hohe Wärmedurchlässigkeit (d.h. Durchlässigkeit für IR-Strahlung) von transparenten thermoplastischen Polymeren bei Sonneneinwirkung zu einer unerwünschten Erwärmung im Inneren. Wie bei Parry Moon, Journal of the Franklin Institute 230, Seiten 583-618 (1940), beschrieben ist, entfällt der größte Teil der solaren Energie neben dem sichtbaren Bereich des Lichtes zwischen 400 und 750 nm auf den Bereich des nahen Infrarots (NIR) zwischen 750 und 2500 nm. Eindringende Sonnenstrahlung wird z.B. im Inneren eines Automobils absorbiert und als langwellige Wärmestrahlung von 5 bis 15 µm emittiert. Da in diesem Bereich übliche Verscheibungsmaterialien und insbesondere transparente thermoplastische Polymere nicht transparent sind, kann die Wärmestrahlung nicht nach außen abstrahlen. Man erhält einen Treibhauseffekt. Um den Effekt möglichst klein zu halten sollte die Transmission der Verscheibungen im NIR möglichst minimiert werden. Übliche transparente thermoplastische Polymere wie z.B. Polycarbonat sind jedoch sowohl im sichtbaren Bereich, als auch im NIR transparent. Es werden daher z.B. Zusätze benötigt, welche im NIR eine möglichst geringe Transparenz aufweisen, bei weiterhin möglichst hoher Transparenz im sichtbaren Bereich des Spektrums.

Für Anwendungen im Bereich Automobilverscheibung ist für die meisten Fälle eine Transmission im sichtbaren (LTA-Wert) von mindestens 70 % vorgeschrieben. Dieser Wert ist in SAE J 1796 (Ausgabe Mai 1995) definiert.

Für die Effizienz der Wärmeabsorption wird der TDS-Wert (Solar-direct transmittance) verwendet gemäß SAE J 1796, Ausgabe Mai 1995. Der Wert beschreibt, wieviel % der solaren Energie die Probe durchdringt und somit zur Erwärmung des Innenraumes beiträgt.

In der Literatur sind verschiedene wärmeabweisende Systeme, die im NIR eine geringe Transmission haben, beschrieben worden. Einerseits sind Oberflächenbeschichtungen oder Lacksysteme bekannt, andererseits gibt es auch infrarotabsorbierende Additive für transparente thermoplastische Polymere. Auf Grund der Möglichkeit der wirtschaftlicheren Herstellbarkeit der Zusammensetzungen aus Polymer und Additiv wäre ein NIR-absorbierendes Additiv wünschenswert.

Bekannte NIR-absorbierende Additive sind z.B. organische Infrarotabsorber, z.B. beschrieben in J. Fabian, H. Nakazumi, H. Matsuoka, Chem.Rev. 92, Seite 1197 ff. (1992).

Bislang sind jedoch keine organischen NIR-Absorber bekannt, welche einerseits geeignete thermische und Lichtstabilität aufweisen und andererseits bei einem TLT von größer als 70 % einen TDS von kleiner 50 % erreichen.

Andererseits sind in der Literatur Lacksysteme mit NIR-absorbierenden Partikeln aus Indium-Zinn-Oxid (ITO) beschrieben worden (z.B. in WO 00/14017). Derartige Additive absorbieren je nach Zusammensetzung und Konzentration ebenfalls im NIR. Aus JP-A 08011266, JP-A 0707482 und aus JP-A 08041441 sind ITO-Partikel bekannt, welche in einer organischen oder anorganischen Matrix eines Lackes eingebettet sind und NIR-Licht effektiv absorbieren bei gleichzeitiger hoher Transparenz im sichtbaren Bereich.

Die im vorherigen Absatz beschriebenen Lacksysteme haben jedoch die Nachteile, dass ein aufwendiger Lackierschritt erforderlich ist und dass es im übrigen nicht möglich ist, eine ausreichende Menge an ITO in die bekannten Lacksysteme einzubringen, ohne dass diese instabil werden.

In JP-A 070278795 wird Polycarbonat mit herkömmlichem ITO mit Hilfe eines Kneters gemischt. Es wurden jedoch keine Aussagen bezüglich der Transparenz der Mischung gegeben. Herkömmliches ITO ergibt mit Polycarbonat trübe Komposite. Dies ist für viele der hier gewünschten Anwendungen, z.B. für Verscheibungen, ungeeignet.

Herkömmliche NIR-absorbierende Nanopartikel (im folgenden sollen unter Nanopartikel Teilchen mit einer Größe von weniger als 200 nm verstanden werden), die aufgrund ihrer Kleinheit unsichtbar sind, wenn sie fein verteilt sind, eignen sich zwar zur Einbringung in ein Lacksystem jedoch nicht zum Einarbeiten in ein thermoplastisches Polymer, da die Nanopartikel unter den üblichen Einarbeitungsbedingungen agglomerieren und somit aufgrund von Lichtstreuung an den Agglomeraten trübe Zusammensetzungen bilden.

Bislang sind keine thermoplastischen Formmassen mit NIR-absorbierende Nanopartikel bekannt, welche bei einem LTA-Wert von größer als 70 % einen TDS-Wert von kleiner als 50 % erreichen.

Wegen des hohen Preises der NIR-absorbierenden Nanopartikel ist es ferner wünschenswert Zusammensetzungen zu entwickeln, die einen möglichst geringen Anteil dieser NIR-absorbierenden Nanopartikel benötigen.

Wünschenswert sind NIR-Absorber, welche einerseits in einem großen Bereich des NIR absorbieren, jedoch gleichzeitig eine hohe Transparenz im sichtbaren Bereich des elektromagnetischen Spektrums aufweisen, und welche sich in transparente thermoplastische Polymere einarbeiten lassen, ohne zu agglomerieren.

US-A-5807511 beschreibt eine Zusammensetzung zur Herstellung von NIR-absorbierenden Filtern, die ein Bindemittel und ein Metalloxid-Pulver enthält. Bei dem Metalloxid kann es sich um dotiertes Indiumoxid handeln.

Der vorliegenden Erfindung liegt die Aufgabe zugrunde Zusammensetzungen bereitzustellen, die einen LTA-Wert von ≥ 70 % und einen TDS-Wert von < 50 %, bevorzugt < 40 % zeigen und somit einen wirkungsvollen Wärmeschutz für Verscheibungen und ähnliche Anwendungen bieten. Dabei soll das übrige Spektrum an Werkstoffeigenschaften der Zusammensetzung möglichst nicht beeinträchtigt werden. Die Nachteile der aus dem Stand der Technik bekannten Zusammensetzungen sollen überwunden werden.

Bevorzugt sollen die bereitzustellenden Zusammensetzungen einen LTA-Wert von ≥ 70 % und einen TDS-Wert von < 50 %, insbesondere < 40 %, zeigen und somit einen wirkungsvollen Wärmeschutz für Verscheibungen und ähnliche Anwendungen bieten.

Es wurde nun überraschend gefunden, dass durch Zusatz von oberflächenmodifizierten Oxiden mit einer Teilchengröße von weniger als 200 nm und gleichzeitigem Zusatz von organischem NIR-Absorber zu transparenten thermoplastischen Polymeren Zusammensetzungen erhalten werden, welche im sichtbaren Bereich des Lichts eine hohe Transparenz aufweisen und gleichzeitig im nahen Infrarot eine intensive Absorption zeigen. Diese Zusammensetzungen können z.B. durch Extrusion oder mittels eines Kneters hergestellt werden.

Die erfindungsgemäßen Zusammensetzungen haben zahlreiche Vorteile. Die durch das transparente thermoplastische Polymer und gegebenenfalls durch weitere vorhandene Additive bestimmten Werkstoffeigenschaften der Zusammensetzungen werden durch die erfindungsgemäßen Oxidteilchen und die organischen NIR-Absorber nicht wesentlich beeinträchtigt.

Außerdem haben die erfindungsgemäßen Zusammensetzungen die Vorteile hoher Lichtbeständigkeit, hoher thermischer Beständigkeit sowie geringer Eigenfarbe.

Außerdem haben die erfindungsgemäßen Zusammensetzungen den Vorteil, dass die erfindungsgemäßen NIR-absorbierenden Nanopartikel lediglich in geringen Mengen eingesetzt werden müssen. Dies ist günstig, weil die NIR-absorbierenden Nanopartikel teuer sind. Dies ist möglich, weil die Kombination aus den NIR-absorbierenden Nanopartikeln und den organischen NIR-Absorbem einen synergistischen Effekt in Bezug auf die NIR-Absorption zeigt.

Gegenstand der Erfindung sind somit Zusammensetzungen enthaltend
a) ein transparentes thermoplastisches Polymer und
b) Oxidteilchen ausgewählt aus der Gruppe bestehend aus Indiumoxid, in dem 2 bis 30 % der Indium-Atome durch Zinnatome ersetzt sind, und Indiumoxid, in dem 10 bis 70 % der Sauerstoffatome durch Fluoratome ersetzt sind,
   wobei die durchschnittliche Teilchengröße der Oxidteilchen (gemessen durch Ultrazentrifugation) kleiner als 200 nm ist,
   und wobei die Oberfläche der Oxidteilchen mit einem Polyvinylbutyral oder mit einer Verbindung der allgemeinen Formel (I)

   SiR¹R²R³R⁴ (I)

   mit
   - R¹ =: Alkylsubstituent mit 6 bis 30, bevorzugt 6 bis 20, besonders bevorzugt 12 bis 18 C-Atomen,
   - R² =: Alkylsubstituent mit 1 bis 30, bevorzugt 1 bis 18, besonders bevorzugt 1 bis 6, C-Atomen oder Alkoxysubstituent mit 1 bis 30, bevorzugt 1 bis 6, besonders bevorzugt 1 bis 2, C-Atomen oder Cl oder Br oder I,
   - R³ =: Alkylsubstituent mit 1 bis 30, bevorzugt 1 bis 18, besonders bevorzugt 1 bis 6, C-Atomen oder Alkoxysubstituent mit 1 bis 30, bevorzugt 1 bis 6, besonders bevorzugt 1 bis 2, C-Atomen oder Cl oder Br oder I,
   - R⁴ =: Alkoxysubstituent mit 1 bis 30, bevorzugt 1 bis 6, besonders bevorzugt 1 bis 2, C-Atomen oder Cl oder Br oder I,
   modifiziert ist, und
c) organische NIR-Absorber.

Die erfindungsgemäßen organischen NIR-Absorber werden bevorzugt in Konzentration von 0,1 ppm bis 1 Gew.-%, besonders bevorzugt zwischen 1 ppm und 1000 ppm und ganz besonders bevorzugt zwischen 30 und 200 ppm verwendet.

Die erfindungsgemäßen Oxidteilchen sind bevorzugt in Konzentrationen von 1 ppm bis 10 Gew.-%, besonders bevorzugt zwischen 100 ppm und 5 Gew.-% und ganz besonders bevorzugt zwischen 0,2 Gew.-% und 2 Gew.-% in den erfindungsgemäßen Zusammensetzungen enthalten.

Diese Konzentrationen beziehen sich auf 1 mm bis 10 mm dicke Schichten. Für dünnere Schichten wie z.B. Folien oder coextrudierte Schichten sind entsprechend höhere Konzentrationen nötig.

Gegenstand der Erfindung ist somit auch die Verwendung der genannten Oxidteilchen zur Herstellung von Zusammensetzungen enthaltend
a) ein transparentes thermoplastisches Polymer und
b) die Oxidteilchen, bevorzugt in einer Menge von 0,01 bis 30 Gewichtsteilen, besonders bevorzugt 0,1 bis 2 Gewichtsteilen, pro 100 Gewichtsteile transparentem, thermoplastischem Polymer und
c) organische NIR-Absorber.

Außerdem ist Gegenstand der Erfindung ein Verfahren zur Herstellung der genannten Zusammensetzungen durch Zugabe der Oxidteilchen und der organischen NIR-Absorber, zusammen oder getrennt, vor, während oder nach der Polymerisation des transparenten, thermoplastischen Polymeren zu dem transparenten thermoplastischen Polymeren oder den Monomeren, aus denen das transparente thermoplastische Polymer polymerisiert wird.

Weiterhin ist Gegenstand der Erfindung die Verwendung der genannten Zusammensetzungen zur Herstellung von Platten, Folien, Verscheibungen, Bedachungen oder anderen Erzeugnissen.

Weiterhin ist Gegenstand der Erfindung ein Verfahren zur Herstellung von Erzeugnissen aus den genannten Zusammensetzungen umfassend die Verarbeitung der Zusammensetzungen durch Extrusion oder Spritzguss.

Außerdem sind Gegenstand der Erfindung Erzeugnisse enthaltend die genannten Zusammensetzungen. Bevorzugt ist hierbei, dass die Erzeugnisse im wesentlichen die genannten Zusammensetzungen enthalten. Besonders bevorzugt ist hierbei dass die Erzeugnisse aus den genannten Zusammensetzungen bestehen.

Insbesondere sind Gegenstand der Erfindung Platten oder Folien oder Verscheibungen oder Bedachungen, enthaltend die genannten Zusammensetzungen. Bevorzugt ist hierbei, dass die Platten oder Folien oder Verscheibungen oder Bedachungen im wesentlichen die genannten Zusammensetzungen enthalten. Besonders bevorzugt ist hierbei, dass die Platten oder Folien oder Verscheibungen oder Bedachungen aus den genannten Zusammensetzungen bestehen.

Erfindungsgemäße bevorzugte Oxidteilchen sind Oxidteilchen aus Indiumoxid, in dem 2 bis 30 % der Indiumatome durch Zinnatome ersetzt sind (sogenanntes zinndotiertes Indiumoxid; Abk.: ITO). Besonders bevorzugt ist dabei Indiumoxid, in dem 4 bis 12 % der Indiumatome durch Zinnatome ersetzt sind.

Weiterhin bevorzugte Oxidteilchen sind solche, bestehend aus Indiumoxid, in dem 10 bis 70 % der Sauerstoffatome durch Fluoratome ersetzt sind (sog. fluordotiertes Zinnoxid; Abk.: FTO).

Die durchschnittliche Teilchengröße der erfindungsgemäßen Oxidteilchen (gemessen durch Ultrazentrifugation) ist kleiner als 200 nm. Sie ist bevorzugt zwischen 3 nm und 200 nm, besonders bevorzugt zwischen 5 nm und 50 nm, ganz besonders bevorzugt zwischen 5 nm und 30 nm.

Die erfindungsgemäßen Oxidteilchen werden durch eine spezielle Oberflächenbehandlung (auch Oberflächenmodifikation genannt) mit Oberflächenmodifikatoren vor Agglomeration bei der Verarbeitung (z.B. der Herstellung der erfindungsgemä-Ben Zusammensetzungen) geschützt. Für eine Oberflächenbehandlung sind Polyvinylbutyral und Verbindungen der allgemeinen Formel (I) geeignet:

SiR¹R²R³R⁴ (I)

wobei für R¹, R², R³ und R⁴ die gegebenen Definitionen gelten.

Besonders geeignet sind n-Octadecyltrimethoxysilan, n-Hexadecyltrimethoxysilan, Methyl-n-octadecyldimethoxysilan, Dimethyl-n-octadecylmethoxysilan, n-Dodecyltriethoxysilan, n-Octadecylmethyldiethoxysilan.

Ganz besonders geeignet sind n-Octadecyltrimethoxysilan und n-Hexadecyltrimethoxysilan.

Ferner ist Polyvinylbutyral (PVB) geeignet.

Es sind auch Mischungen aus mehreren der genannten Oberflächenmodifikatoren geeignet.

Die Verbindungen SiR¹R²R³R⁴ der allgemeinen Formel (I) sind nach bekannten Methoden herstellbar. Sie sind auch im Handel erhältlich, beispielsweise bei der Fa. Aldrich (D-89555 Steinheim, Deutschland).

Die Oberflächenmodifikation der erfindungsgemäßen Oxidteilchen kann nach beliebigen dem Fachmann bekannten Verfahren durchgeführt werden.

Die Herstellung der erfindungsgemäßen Oxidteilchen kann nach bekannten Verfahren erfolgen. Beispielsweise und bevorzugt kann ein Cofällungsprozess von Salzen der verwendeten Bestandteile in Gegenwart einer oder mehreren oberflächenmodifizierten Komponenten verwendet werden. Nach Entfernung des Lösungsmittels werden dabei die erhaltenen Pulver unter reduzierenden Bedingungen kalziniert und dann nach Zugabe von Additiven und eines weiteren Oberflächenmodifikators (Dispergierhilfe) einer mechanischen Zerkleinerungsbehandlung unterworfen.

Bei der oberflächenmodifizierenden Komponente, welche bei der Herstellung der erfindungsgemäßen Oxidteilchen verwendet werden, sind folgende Verbindungen verwendbar:
1. Gruppe der Mono- und Polycarbonsäuren, wie z.B. Essigsäure, Propionsäure, Buttersäure, Pentansäure, Hexansäure, Acrylsäure, Metacrylsäure, Crotonsäure, Zitronensäure, Adipinsäure, Bernsteinsäure, Glutansäure, Oxalsäure, Maleinsäure, Stearinsäure und insbesondere Trioxadekansäure sowie den entsprechenden Anhydriden.
2. Betacarbonylverbindungen, insbesondere Acetylaceton, 2,4-Hexandion, 3,5-Heptandion, Acetessigsäure und Acetessigsäurealkylester.
3. Aminosäuren, insbesondere β-Alanin.
4. Doppelkammpolymere, insbesondere Tween80®.
5. Säureamide, insbesondere Caprolactam.

Für die Herstellung des besonders bevorzugten Oxides ITO kommen als Ausgangssubstanzen besonders Indiumchlorid, Indiumnitrat, Indiumacetat, Indiumsulfat oder Indiumalkoxide bzw. Zinnchlorid, Zinnsulfat oder Zinnalkoxiden in Frage. Primäre, sekundäre, tertiäre, aliphatische oder aromatische Amine, Tetramethylammoniumhydroxid, NaOH, KOH, Ammoniak (gasförmig) und insbesondere Ammoniumhydroxid werden zur Fällung der Indium- und Zinnprecusor bevorzugt eingesetzt. Die Kalzinierung der so erhaltenen Pulver (ein Indiumzinnoxid-Hydroxid-Gemisches) erfolgt bevorzugt unter reduzierenden Bedingungen bei Temperaturen zwischen 200 und 400°C (bevorzugt 250°C). Die isotherme Haltezeit beträgt z.B. zwischen 15 und 120 min, bevorzugt 60 min. Die Reduktion kann durch Kohlenmonoxid oder Kohlenmonoxidstickstoff oder Wasserdampf, Wasserstoff oder Formiergas (Wasserstoff, Stickstoff) erfolgen. Zur Suspensionsherstellung werden unter Verwendung der schon oben genannten oberflächenaktiven Substanzen die Pulver z.B. über einen mechanischen Zerkleinerungsprozess dispergiert. Die Zerkleinerung erfolgt z.B. in Planetkugelmühlen, Rührwerkskugelmühlen und insbesondere in der Mörsermühle und im Walzenstuhl in Lösungsmitteln wie Wasser, Toluol, aber insbesondere in Ethylenglykol oder Diethylenglykolmonobutylether.

Bezogen auf 100 Gewichtsteile erfindungsgemäße Oxidteilchen werden die Oberflächenmodifikatoren bevorzugt in Mengen von 10 bis 2 000 Teilen, besonders bevorzugt in Mengen von 90 bis 1 000 Teilen und ganz besonders bevorzugt in Mengen von 90 bis 600 Teilen eingesetzt.

Erfindungsgemäß geeignete organische NIR-Absorber sind organische NIR-Absorber, welche eine besonders hohe Lichstabilität zeigen und eine hohe thermische Stabilität zeigen, und mit herkömmlichen Methoden in transparenten thermoplastischen Polymeren verarbeitbar sind.

Besonders geeignet sind organische NIR-Absorber sind aufgrund ihrer hohen Lichtechtheit und thermischen Beständigkeit Phthalocyanine und Naphthalocyanine.

Als Phthalocyanine sind besonders geeignet Verbindungen der allgemeinen Formel (II) 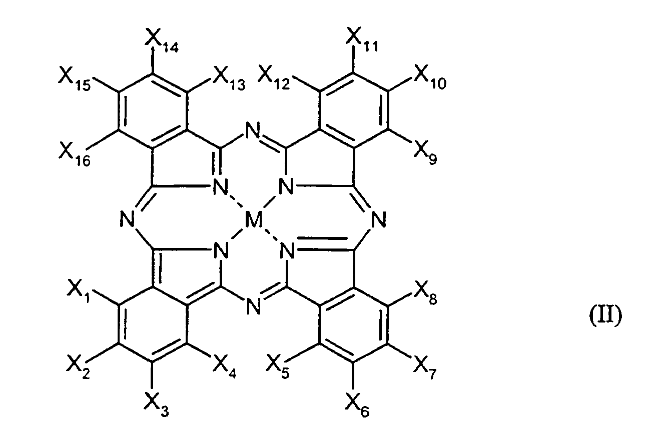 worin
- M: ein beliebiges Metallzentrum oder Wasserstoff, bevorzugt VO, Cu, Al, Zn, Ni, HH, SiR₂, AlR, Mg, Fe, GaR, MnR, SnR, Na₂, Li₂, TiO und besonders bevorzugt VO oder Cu ist,
- R: ein aliphatischer oder aromatischer Rest, auch ein Alkoxyrest bzw. Aryloxyrest ist und
- X₁ bis X₁₆: unabhängig voneinander Wasserstoff, Halogen, aliphatischer Rest, aromatischer Rest, Alkoxyrest, Aryloxyrest, -S-Alkyl, -S-Aryl, -NH-Alkyl, -NH-Aryl, -NAlkyl₂, -NAryl₂, -NHCO-Alkyl oder -NHCO-Aryl sind.
wobei sperrige Reste wie tert.-Butyl, Phenoxy oder Phenyl bevorzugt sind.

Besonders bevorzugt sind Kupfer(II) 1,4,8,11,15,18,22,25-octabutoxy-29H,31H-phthalocyanin oder Vanadyl 2,9,16,23-tetraphenoxy-29H,31H-phthalocyanin.

Die erfindungsgemäßen Phthalocyanine sind bevorzugt in Konzentrationen von 0,1 ppm bis 1 Gew.-%, besonders bevorzugt zwischen 1 ppm und 0,1 Gew.-% und besonders bevorzugt zwischen 30 und 200 ppm in den erfindungsgemäßen Zusammensetzungen enthalten.

Als Naphthalocyanine sind besonders geeignet Verbindungen der Formel III 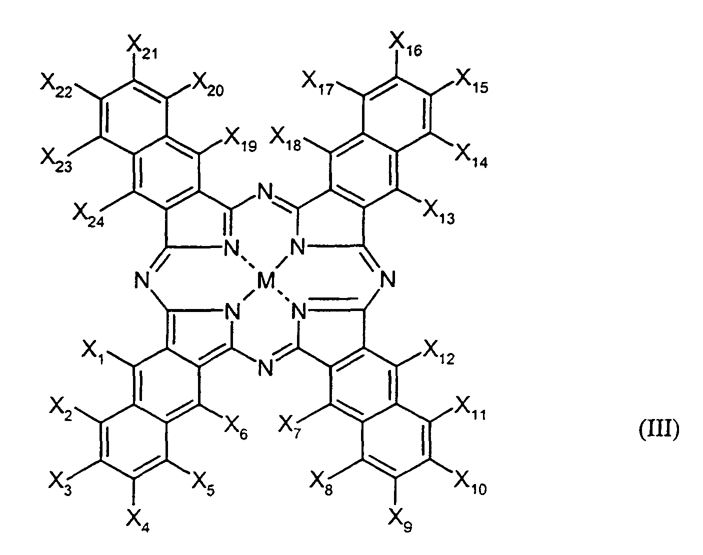 worin
- M: ein beliebiges Metallzentrum oder Wasserstoff, bevorzugt VO, Cu, Al, Zn, Ni, HH, SiR₂, AlR, Mg, Fe, GaR, MnR, SnR, Na₂, Li₂, TiO und besonders bevorzugt VO oder Cu ist,
- R: ein aliphatischer oder aromatischer Rest, auch ein Alkoxyrest bzw. Aryloxyrest ist und
- X₁ bis X₂₄: unabhängig voneinander Wasserstoff, Halogen, aliphatischer Rest, aromatischer Rest, Alkoxyrest, Aryloxyrest, -S-Alkyl, -S-Aryl, -NH-Alkyl, NH-Aryl, -NAlkyl₂, -NAryl₂, -NHCO-Alkyl oder -NHCO-Aryl sind,
wobei sperrige Reste wie tert.-Butyl, Phenoxy oder Phenyl bevorzugt sind.

Besonders bevorzugt sind Vanadyl 5,14,23,32-tetraphenyl-2,3-naphthalocyanin und Vanadyl 2,11,20,29-tetra-tert-butyl-2,3-naphthalocyanin.

Die erfindungsgemäßen Naphthalocyanine sind bevorzugt in Konzentrationen von 0,1 ppm bis 1 Gew.-%, besonders bevorzugt zwischen 1 ppm und 0,1 Gew.-% und ganz besonders bevorzugt zwischen 30 und 200 ppm in den erfindungsgemäßen Zusammensetzungen enthalten.

Es sind auch Mischungen verschiedener Naphthalocyanine und Phthalocyanine geeignet. Bevorzugt sind Mischungen von jeweils mehreren Naphthalocyaninen und Phthalocyaninen, welche Absorptionsmaxima bei unterschiedlichen Wellenlängen des NIR besitzen.

Es können auch Mischungen von einem oder mehreren Phthalocyaninen oder Naphthalocyaninen mit weiteren NIR-Absorber verwendet werden.

Ferner können auch Mischungen mit herkömmlichen Farbstoffen, welche im sichtbaren Bereich absorbieren, verwendet werden um einen gewünschten Farbton zu erzeugen.

Die Farbstoffe können in Konzentrationen von 0,1 ppm bis 1 Gew.-% eingesetzt werden, bevorzugt zwischen 1 ppm und 0,1 Gew.-% und besonders bevorzugt zwischen 10 und 200 ppm.

Die Herstellung der erfindungsgemäßen NIR-Absorber kann nach bekannten Methoden erfolgen. Diese sind beispielsweise beschrieben in "Phthalocyanines and Related Compounds", Hanack, Heckmann and Polley, Houben-Weyl, Vol. E9d, Seite 717 bis 824, Thiene Verlag, Stuttgart, 1998. Teilweise sind sie im Handel erhältlich.

Transparente thermoplastische Polymere im Sinne der Erfindung sind z.B. Polycarbonate, aromatische Polyester, wie z.B. PET, PEN oder PETG, transparente thermoplastische Polyurethane, transparente Acrylate und Methacrylate wie z.B. PMMA, sowie Polyolefine, wie z.B. transparente Polypropylentypen oder Polyolefine auf der Basis von cyclischen Olefinen (z.B. TOPAS® , ein Handelsprodukt der Firma Ticona). Auch Mischungen von mehreren transparenten thermoplastischen Polymeren sind möglich.

Bevorzugt sind Polycarbonate oder Copolycarbonate.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Polycarbonate im Sinne der vorliegenden Erfindung sind sowohl Homopolycarbonate als auch Copolycarbonate; die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kemalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 3 028 635, US-A 2 999 835, US-A 3 148 172, US-A 2 991 273, US-A 3 271 367, US-A 4 982 014 und US-A 2 999 846, in DE-A 1 570 703, DE-A 2 063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Falle der Homopolycarbonate ist nur ein Diphenol eingesetzt, im Falle der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol 2,4,6-Trijodphenol, p-Jodphenol, sowie deren Mischungen.

Bevorzugter Kettenabbrecher ist p-tert.-Butylphenol.

Geeignete Monocarbonsäuren sind weiterhin Benzoesäure, Alkylbenzoesäuren und Halogenbenzoesäuren.

Bevorzugte Kettenabbrecher sind die Phenole der Formel (IV) 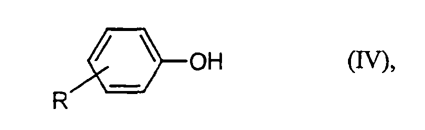 worin
- R: Wasserstoff oder ein C₁-C₃₀ Alkylrest, linear oder verzweigt ist, bevorzugt tert.-Butyl ist oder ein verzweigter oder unverzweigter C₈- und/oder C₉-Alkylrest ist.

Die Menge an einzusetzendem Kettenabbrecher beträgt bevorzugt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Falle des Umesterungsverfahrens werden die Verzweiger zusammen mit den Diphenolen eingesetzt.

Die erfindungsgemäßen Zusammensetzungen können ferner noch übliche Polymeradditive enthalten, wie z.B. die in EP-A 0 839 623, WO 96/15102 und EP-A 0 500 496 beschriebenen UV-Stabilisatoren, Antioxidantien und Entformungsmittel, aber auch literaturbekannte Flammschutzmittel, Glasfasern, Füllstoffe, Schaummittel, Pigmente, optische Aufheller oder Farbstoffe, in den für die jeweiligen Thermoplasten üblichen Mengen. Bevorzugt sind Mengen von jeweils bis zu 5 Gew.-%, bevorzugt 0,01 bis 5 Gew.-% bezogen auf die Menge der Zusammensetzungen, besonders bevorzugt 0,01 Gew.-% bis 1 Gew.-% bezogen auf die Menge der Zusammensetzungen. Auch Mischungen mehrerer Zusatzstoffe sind geeignet.

Erfindungsgemäß besonders geeignete UV-Absorber und Antioxidantien sind z.B. in EP-A 0 839 623, WO 96/15102 und EP-A 0 500 496 beschrieben.

Besonders geeignet als UV-Absorber sind Benzotriazole, Triazine, Benzophenone, sowie weitere Verbindungen wie z.B. arylierte Cyanoacrylate. Erfindungsgemäß ganz besonders bevorzugt geeignet sind Hydroxy-Benzotriazole, wie 2-(3',5-'Bis-(1,1-dimethylbenzyl)-2'-hydroxy-phenyl)-benzotriazol (Tinuvin® 234, Ciba Spezialitätenchemie, Basel), Tinuvin® 326 FL (Ciba Spezialitätenchemie, Basel), 2-(2'-Hydroxy-5'-(tert-octyl)-phenyl)-benzotriazol (Tinuvin® 329, Ciba Spezialitätenchemie, Basel), 2-(2'-Hydroxy-3'-(2-butyl)-5'-(tert-butyl)-phenyl)-benzotriazol (Tinuvin® 350, Ciba Spezialitätenchemie, Basel), Bis-(3-(2H-benztriazolyl)-2-hydroxy-5-tert-octyl)methan, (Tinuvin® 360, Ciba Spezialitätenchemie, Basel), 2-(4-Hexoxy-2-hydroxyphenyl)-4,6-diphenyl-1,3,5-triazin (Tinuvin® 1577, Ciba Spezialitätenchemie, Basel), sowie das Benzophenon 2,4-Dihydroxy-benzophenon (Chimasorb22® , Ciba Spezialitätenchemie, Basel).

Bevorzugt werden die UV-Absorber in Mengen von jeweils zwischen 0.001 Gew.-% und 10 Gew.-%, bevorzugt 0.01 Gew.-% und 1 Gew.-% vorzugsweise zwischen 0.1-1 Gew.-% und ganz besonders bevorzugt zwischen 0.2 und 0.6 Gew.-% eingesetzt.

Es ist bevorzugt, dass die als Verunreinigung vorhandenen Ionengehalte in den erfindungsgemäßen Zusammensetzungen weniger als 10 ppm betragen, besonders bevorzugt weniger als 5 ppm.

Die Maßnahmen zur Herstellung der thermoplastischen Polycarbonate sind dem Fachmann geläufig.

Die erfindungsgemäßen Zusammensetzungen können nach den üblichen Methoden, wie z.B. Heißpressen, Spinnen, Extrudieren oder Spritzgießen, in Erzeugnisse, d.h. geformte Gegenstände überführt werden, wie z.B. Spielzeugteile, aber auch Fasern, Folien, Bändchen, Platten, Stegplatten, Gefäße, Rohre und sonstige Profile. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Die erfindungsgemäßen Zusammensetzungen können zu Erzeugnissen verarbeitet werden, in dem man beispielsweise die Zusammensetzungen zu Granulat extrudiert und dieses Granulat, gegebenenfalls nach Zusatz der obengenannten Additive, durch Spritzguss oder Extrusion zu verschiedenen Erzeugnissen in bekannter Weise verarbeitet.

Die erfindungsgemäßen Zusammensetzungen können zu Erzeugnissen verarbeitet werden, in dem man die in bekannter Weise isolierten transparenten thermoplastischen Polymeren zu Granulat extrudiert und dieses Granulat, gegebenenfalls nach Zusatz der Additive, durch Spritzguss zu verschiedenen Artikeln in bekannter Weise verarbeitet. Die Zusammensetzungen können aber auch auf einem Kneter verarbeitet werden.

Die erfindungsgemäßen Zusammensetzungen können ferner noch übliche Thermostabilisatoren enthalten. Als Thermostabilisatoren sind erfindungsgemäß besonders geeignet: gehinderte Phenole, beispielsweise Octadecyl-3-(3',5'-di-*tert*-butyl-4'-hydroxyphenyl)-propionat (Irganox® 1076, Ciba Specialty Chemicals, Basel, Schweiz). Weiterhin sind erfindungsgemäß besonders geeignete Thermostabilisatoren Phosphite, insbesondere Tris(2,4-di-*tert*-butyl-phenyl)-phosphit (Irgafos® 168, Ciba Specialty Chemicals, Basel, Schweiz) oder Phosphine, wie z.B. Triphenylphosphin.

Die erfindungsgemäßen Zusammensetzungen können übliche Entformungsmittel enthalten. Besonders geeignete Entformungsmittel sind Pentaerythrittetrastearat (PETS) oder Glycerinmonostearat (GMS).

Erfindungsgemäß bevorzugte Erzeugnisse sind Platten, Folien, Verscheibungen, beispielsweise Autosonnendächer, Bedachungen oder Gebäudeverglasungen, die die erfindungsgemäßen Zusammensetzungen enthalten. Als weitere Komponenten der erfindungsgemäßen Erzeugnisse neben den erfindungsgemäßen Zusammensetzungen können beispielsweise weitere Werkstoffteile in den erfindungsgemäßen Erzeugnissen enthalten sein. Beispielsweise können Verscheibungen Dichtungsmaterialien am Rand der Verscheibungen enthalten. Bedachungen können beispielsweise Metallkomponenten wie Schrauben oder ähnliches enthalten die zur Befestigung der Bedachungselemente dienen können.

Die erfindungsgemäßen Zusammensetzungen sind als transparente Erzeugnisse universell einsetzbar, wo Wärmedurchlässigkeit unerwünscht ist. Besonders geeignet ist die Anwendung bei Automobilkomponenten, wie z.B. Verscheibungselemente, Autosonnendächer oder Kunststoffstreuscheiben. Ebenfalls besonders geeignet ist die Anwendung bei extrudierten Platten, wie z.B. Massivplatten, Doppelstegplatten oder Multistegplatten, optional auch mit einer oder mehreren coextrudierten Schichten für Gebäudeverglasung oder Gewächshäuser, sowie die Anwendung in Spritzgußteilen, wie Lebensmittelbehälter, Bestandteilen von Elektrogeräten und in Brillengläser z.B. auch für Schutzbrillen.

### Beispiele:

Zur Herstellung der Probekörper wurde ein additivfreies, unstabilisiertes Polycarbonat (Makrolon® 2808 mit einer Molmasse M_{w} von ca. 28 000 bzw. Makrolon® 3208 mit einer Molmasse M_{w} von ca. 31.000, beide Produkte von der Bayer AG, Leverkusen) bei 300°C auf einem Extruder mit der angegebenen Menge Additiv kompoundiert und anschließend granuliert. Aus diesem Granulat werden anschließend Farbmusterplatten (76 mm x 50 mm x 2.5 mm) nach dem Spritzgussverfahren hergestellt.

Als Maß für die Transmission im sichtbaren Bereich des Lichtes wurde der LTA-Wert (total luminous transmittance) bestimmt; als Maß für die Durchlässigkeit der gesamten Sonnenenergie der TDS-Wert (solar direct transmittance). Das Ziel ist, einen möglichst niedrigen TDS-Wert bei gleichzeitig möglichst hohem LTA-Wert zu erhalten. Die Transmissionsspektren wurden mit einem herkömmlichen UV-VIS-NIR-Spektrometer "lamda 9" der Firma Perkin Elmer gemessen. Daraus konnten der LTA-Wert und der TDS-Wert gemäß SAE J1796 bestimmt werden.

### Beispiel 1:

140 g Indium(III)chlorid (0,63 mol, wasserfrei), 18 g Zinn(IV)chlorid x 5 H₂O und 5,6 g Caprolactam wurden in 1400 ml Wasser gegeben und gerührt. Nachdem eine klare Lösung entstanden war, wurde diese auf 50°C erwärmt. Nachdem die Temperatur erreicht war, tropfte man unter heftigem Rühren 105 ml Ammoniumhydroxidlösung (25 %) zu. Die Suspension wurde bei einer Temperatur von 50°C weitere 24 Stunden gerührt. Zur vollständigen Fällung wurden dem Gemisch danach noch 280 ml Ammoniumhydroxidlösung hinzugefügt. Es bildete sich ein weißer Niederschlag aus Indiumhydroxid, der abzentrifugiert wurde (30 min bei 4000 U/min). Das Pulver wurde im Vakuumtrockenschrank bei 190°C so lange getrocknet, bis eine leichte Gelbfärbung des Pulvers festzustellen war. Das getrocknete Pulver wurde fein gemörser, in Kristallisationsschalen verteilt und in einen Formiergasofen gestellt. Der Ofen wurde evakuiert, dann mit Stickstoff geflutet. Der Ofen wurde mit einer Heizrate von 250°C/Stunde auf 250°C aufgeheizt bei einem Stickstofffluss von 200 Liter/Stunde. Diese Temperatur wurde für 60 Minuten unter Formiergasatmosphäre bei einem Gasfluss von 300 Liter/Stunde gehalten. Danach kühlte der Ofen unter Stickstoffatmosphäre bis auf Raumtemperatur ab (Dauer ca. 5 Stunden). Hieraus resultierte dunkelbraunes ITO-Pulver. Zu 100 Teilen einer 20 % Suspension dieses ITO Pulvers in Ethanol wurden 20 Teile n-Octadecyltrimethoxysilan gegeben und 1 min in einem Ultraschallbad behandelt. Schließlich wurde das Lösungsmittel bei 60°C und 100 mbar abdestilliert. Man erhielt nanoskaliges Indiumzinnoxid (ITO) mit einer durchschnittlichen Partikelgröße von kleiner als 50 nm.

### Beispiel 2:

Es wurde nanoskaliges frisch hergestelltes Indiumzinnoxid (ITO) gemäß Beispiel 1 verwendet. Makrolon® 2808 wurde bei 280°C auf einem Doppelwellenextruder aufgeschmolzen. Dann dosierte man 0,8 Gew.-% (Beispiel 2a) bzw. 1,5 Gew.-% (Beispiel 2b) nanoskaliges ITO direkt in die Polycarbonatschmelze. Der Polymerstrang wird gekühlt und granuliert. Das Granulat wird im Vakuumtrockenschrank bei 80°C getrocknet und auf einer Spritzgussmaschine bei 280°C zu Prüfkörpern mit den Abmessungen 60 mm x 60 mm x 2 mm verarbeitet.

### Beispiel 3:

100 Teile Makrolon® 2808 wurden mit 0,3 Teilen 2'-Hydroxy-3'-(2-butyl)-5'-(tert-butyl)-phenyl)-benzotriazol (Tinuvin® 350, Ciba Spezialitätenchemie, Basel), 0,47 Teilen frisch hergestelltem ITO gemäß Beispiel 1, 0,0012 Teilen Projet 830 NP (Avecia, Manchester, UK) 0,0025 Teilen Kupfer(II) 1,4,8,11,15,18,22,25-octabutoxy-29H,31H-phthalocyanin (Aldrich, D-89555 Steinheim, Deutschland) und 0,0096 Teilen Vanadyl 5,14,23,32-tetraphenyl-2,3-naphthalocyanin (Aldrich) bei 280°C kompoundiert und wie in Beispiel 2 zu Farbmusterplättchen verarbeitet.

### Beispiel 4:

100 Teile Makrolon® 2808 wurden mit 0,3 Teilen 2'-Hydroxy-3'-(2-butyl)-5'-(tert-butyl)-phenyl)-benzotriazol (Tinuvin® 350, Ciba Spezialitätenchemie, Basel, Schweiz), 0,33 Teilen frisch hergestelltes ITO gemäß Beispiel 1, 0,0053 Teilen Kupfer(II)1,4,8,11,15,18,22,25-octabutoxy-29H,31H-phthalocyanin (Aldrich) und 0,0122 Teilen Vanadyl 5,14,23,32-tetraphenyl-2,3-naphthalocyanin (Aldrich) bei 280°C kompoundiert und wie in Beispiel 2 zu Farbmusterplättchen verarbeitet.

### Beispiel 5:

100 Teile Makrolon® 3208 wurden mit 0,0068 Teile Vanadyl 5,14,23,32-tetraphenyl-2,3-naphthalocyanin (Aldrich), 0,0072 Teile Kupfer(II)1,4,8,11,15,18,22,25-octabutoxy-29H,31H-phthalocyanin (Aldrich), 0,0038 Teile Vanadyl 2,9,16,23-tetraphenoxy-29H,31H-phthalocyanin (Aldrich) und 0,27 Teile 2-(3',5'-Bis-(1,1-dimethylbenzyl)-2'-hydroxy-phenyl)-benzotriazol (Tinuvin® 234, Ciba Spezialitätenchemie, Basel, Schweiz) bei 300°C kompoundiert und zu Farbmusterplättchen mit 2 mm Dicke verarbeitet.

### Beispiel 6:

100 Teile Makrolon® 2808 wurden mit 0,3 % 2'-Hydroxy-3'-(2-butyl)-5'-(tert-butyl)-phenyl)-benzotriazol (Tinuvin® 350, Ciba Spezialitätenchemie, Basel, Schweiz) kompoundiert und wie in Beispiel 2 zu Farbmusterplättchen verarbeitet.

### Beispiel 7:

Die LTA- und TDS-Werte wurden gemäß SAE J1796 bestimmt. Die von den Beispielen 2-6 erhaltenen LTA und TDS-Werte sind in Tabelle 1 aufgeführt.

**Tabelle 1: LTA- und TDS-Werte der Beispiele 2-6**

| Beispiel | LTA (in %) | TDS (in %) |
|---|---|---|
| 2a | 65 | 42 |
| 2b | 58 | 31 |
| 3 | 71 | 37 |
| 4 | 70 | 37 |
| 5 | 68 | 49 |
| 6 | 90 | 86 |

Die LTA- und TDS-Werte in Tabelle 1 zeigen, dass die erfindungsgemäßen Beispiele 3 und 4 gegenüber den anderen überlegen sind. Der TDS-Wert ist bei den Beispielen 3 und 4 der niedrigste, abgesehen von Beispiel 2b, welcher einen zu niedrigen LTA-Wert besitzt (Voraussetzung für Automobilverscheibung LTA mindestens 70 % oder größer). Unmodifiziertes Makrolon® (Beispiel 6) hat einen sehr hohen LTA-Wert, aber auch einen zu hohen TDS-Wert). Verglichen mit den Beispielen 2a und 2b ist bei den Beispielen 3 und 4 ferner viel weniger ITO nötig (synergistischer Effekt).

## Patentansprüche

1. Zusammensetzungen enthaltend
a) ein transparentes thermoplastisches Polymer und
b) Oxidteilchen ausgewählt aus Indiumoxid, in dem 2 bis 30% der Indium-Atome durch Zinnatome ersetzt sind, und Indiumoxid, in dem 10 bis 70% der Sauerstoffatome durch Fluoratome ersetzt sind,
wobei die durchschnittliche Teilchengröße der Oxidteilchen kleiner als 200 nm ist,
und wobei die Oberfläche der Oxidteilchen mit einem Polyvinylbutyral oder mit einer Verbindung der allgemeinen Formel (I)
SiR¹R²R³R⁴ (I)
mit
R¹ = Alkylsubstituent mit 6 bis 30 C-Atomen,
R² = Alkylsubstituent mit 1 bis 30 C-Atomen oder Alkoxysubstituent mit 1 bis 30 C-Atomen oder Cl oder Br oder I,
R³ = Alkylsubstituent mit 1 bis 30 C-Atomen oder Alkoxysubstituent mit 1 bis 30 C-Atomen oder Cl oder Br oder I,
R⁴ = Alkoxysubstituent mit 1 bis 30 C-Atomen oder Cl oder Br oder I,
modifiziert ist, und
c) organische NIR-Absorber.

2. Zusammensetzungen nach Anspruch 1, wobei der organische NIR-Absorber eine Verbindung der allgemeinen Formel (II) 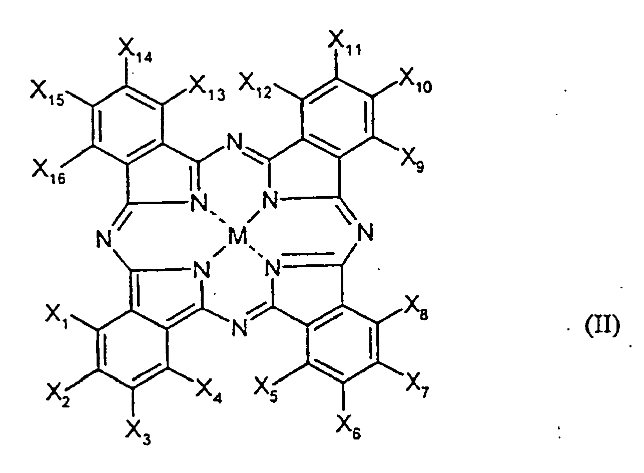 worin
M ein beliebiges Metallzentrum oder Wasserstoff ist und
X₁ bis X₁₆ unabhängig voneinander Wasserstoff, Halogen, aliphatischer Rest, aromatischer Rest, Alkoxyrest, Aryloxyrest, -S-Alkyl, -S-Aryl, -NH-Alkyl, -NH-Aryl, -NAlkyl₂, -NAryl₂, -NHCO-Alkyl oder -NHCO-Aryl sind,
ist.

3. Zusammensetzungen nach Anspruch 1, wobei der organische NIR-Absorber eine Verbindung der Formel (III) 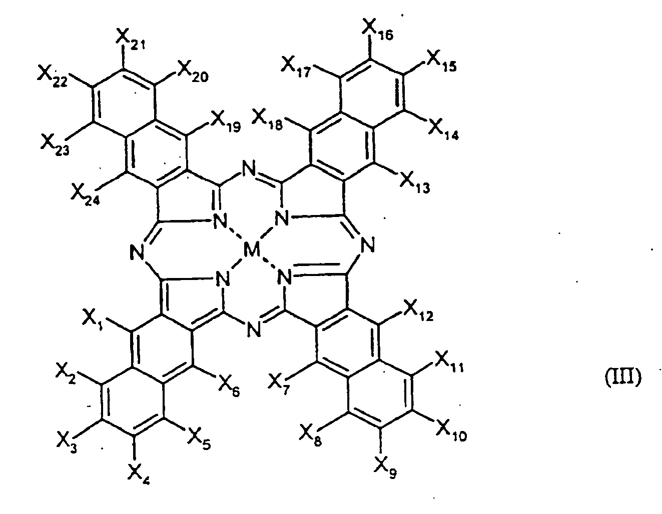 worin
M ein beliebiges Metallzentrum oder Wasserstoff ist und
X₁ bis X₂₄ unabhängig voneinander Wasserstoff, Halogen, aliphatischer Rest, aromatischer Rest, Alkoxyrest, Aryloxyrest, -S-Alkyl, -S-Aryl, -NH-Alkyl, -NH-Aryl, -NAlkyl₂, -NAryl₂, -NHCO-Alkyl oder -NHCO-Aryl sind,
ist.

4. Zusammensetzung nach einem der Ansprüche 1 bis 3, wobei die Verbindung der allgemeinen Formel (I) einen Alkylsubstituenten mit 6 bis 20 C-Atomen als Substituent R¹ aufweist.

5. Verfahren zur Herstellung der Zusammensetzungen gemäß einem der Ansprüche 1 bis 4 durch Zugabe der Oxidteilchen und des organischen NIR-Absorbers, zusammen oder getrennt, vor, während oder nach der Polymerisation des transparenten, thermoplastischen Polymers zu dem transparenten thermoplastischen Polymer oder den Monomeren, aus denen das transparente thermoplastische Polymer polymerisiert wird.

6. Verwendung der Zusammensetzungen gemäß einem der Ansprüche 1 bis 4 zur Herstellung von Platten, Folien, Verschreibungen, Bedachungen oder anderen Erzeugnissen.

7. Verfahren zur Herstellung von Erzeugnissen aus Zusammensetzungen gemäß einem der Ansprüche 1 bis 4 umfassend die Verarbeitung der Zusammensetzungen durch Extrusion oder Spritzguss.

8. Erzeugnisse enthaltend die Zusammensetzungen gemäß einem der Ansprüche 1 bis 4.

9. Platten oder Folien oder Verscheibungen oder Bedachungen, enthaltend die Zusammensetzungen gemäß einem der Ansprüche 1 bis 4.

## Claims

1. Compositions containing
a) a transparent thermoplastic polymer and
b) oxide particles selected from indium oxide in which 2 to 30% of the indium atoms are replaced by tin atoms, and indium oxide in which 10 to 70% of the oxygen atoms are replaced by fluorine atoms,
and whereby the average particle size of the oxide particles is less than 200 nm,
and whereby the surface of the oxide particles is modified with a polyvinyl acetal or with a compound having the general formula (I)
SiR¹R²R³R⁴ (I)
where
R¹ = alkyl substitutent with 6 to 30 C atoms,
R² = alkyl substituent with 1 to 30 C atoms or alkoxy substituent with 1 to 30 C atoms or Cl or Br or I,
R³ = alkyl substituent with 1 to 30 C atoms or alkoxy substituent with 1 to 30 C atoms or Cl or Br or I,
R⁴ = alkoxy substituent with 1 to 30 C atoms or Cl or Br or I, and
c) organic NIR absorbers.

2. Compositions according to claim 1, whereby the organic NIR absorber is a compound having the general formula (II) 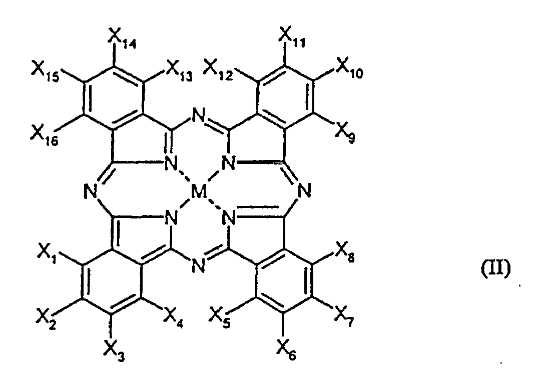 where
M is any metal centre or hydrogen and
X₁ to X₁₆ are mutually independently hydrogen, halogen, aliphatic radical, aromatic radical, alkoxy radical, aryloxy radical, -S alkyl, -S aryl, -NH alkyl, -NH aryl, -N alkyl₂, -N aryl₂, -NHCO alkyl or -NHCO aryl.

3. Compositions according to claim 1, whereby the organic NIR absorber is a compound having the formula (III) 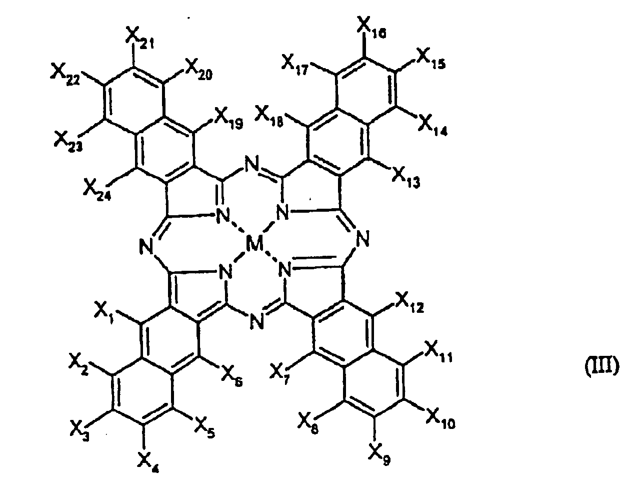 where
M is any metal centre or hydrogen and
X₁ to X₂₄ are mutually independently hydrogen, halogen, aliphatic radical, aromatic radical, alkoxy radical, aryloxy radical, -S alkyl, -S aryl, -NH alkyl, -NH aryl, -N alkyl₂, -N aryl₂, -NHCO alkyl or -NHCO aryl.

4. Composition according to any one of claims 1 to 3, whereby the compound having the general formula (I) has an alkyl substituent with 6 to 20 C atoms as substituent R¹.

5. Process for the production of compositions according to any one of claims 1 to 4 by addition of the oxide particles and the organic NIR absorbers, together or separately, before, during or after polymerisation of the transparent, thermoplastic polymer to the transparent thermoplastic polymer or to the monomers from which the transparent thermoplastic polymer is polymerised.

6. Use of the compositions according to any one of claims 1 to 4 in the manufacture of sheets, films, glazing systems, roofing systems or other products.

7. Process for the manufacture of products from compositions according to any one of claims 1 to 4, consisting in processing the compositions by extrusion or injection moulding.

8. Products comprising the compositions according to any one of claims 1 to 4.

9. Sheets or films or glazing systems or roofing systems containing the compositions according to any one of claims 1 to 4.

## Revendications

1. Composés, constitués
a) d'un polymère thermoplastique transparent, et
b) de particules d'oxyde sélectionnées parmi un oxyde d'indium dans lequel 2 à 30 % des atomes d'indium sont remplacés par des atomes d'étain, et un oxyde d'indium dans lequel 10 à 70 % des atomes d'oxygène sont remplacés par des atomes de fluor,
dans lesquelles la granulométrie moyenne des particules d'oxyde est inférieure à 200 nm,
et dans lesquelles la surface des particules d'oxyde est modifiée avec un butyral polyvinylique ou avec un composé de formule générale (I)
SiR¹R²R³R⁴ (I)
avec
R¹ = substituant alkyle avec 6 à 30 atomes de carbone (c),
R² = substituant alkyle avec 1 à 30 atomes de carbone, ou substituant alcoxy avec 1 à 30 atomes de carbone ou de chlore ou de brome ou d'iode,
R³ = substituant alkyle avec 1 à 30 atomes de carbone, ou substituant alcoxy avec 1 à 30 atomes de carbone ou de chlore ou de brome ou d'iode
R⁴ = substituant alcoxy avec 1 à 30 atomes de carbone ou de chlore ou de brome ou d'iode, et
c) un absorbant organique du proche infrarouge (NIR).

2. Composés selon la revendication 1, dans lesquels l'absorbant organique NIR est un composé de formule générale (II) 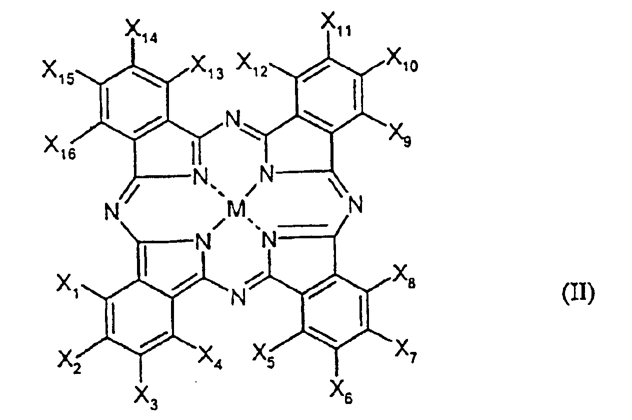 dans laquelle
M est un noyau métallique quelconque, ou de l'hydrogène, et
X₁ à X₁₆ sont de l'hydrogène, un halogène, un résidu aliphatique, un résidu aromatique, un résidu alcoxy, un résidu aryloxy, un -S-alkyle, un -S-aryle, un -NH-alkyle, un -NH-aryle, un -N alkyle₂, un -N aryle₂, un -NHCO-alkyle ou un-NHCO-aryle, indépendants les uns des autres,

3. Composés selon la revendication 1, dans lesquels l'absorbant organique NIR est un composé de formule (III) 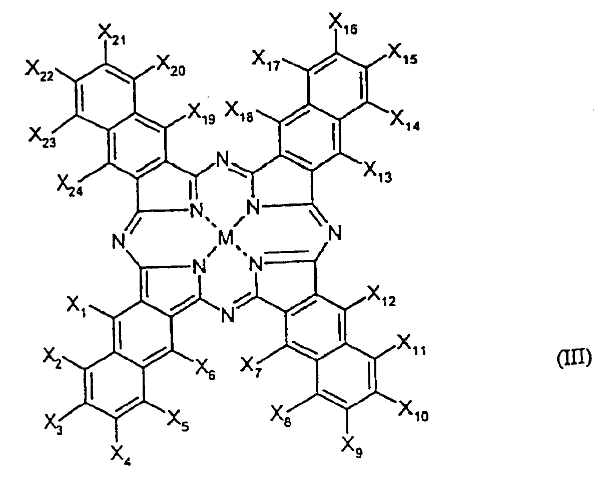 dans laquelle
M est un noyau métallique quelconque, ou de l'hydrogène, et
X₁ à X₂₄ sont de l'hydrogène, un halogène, un résidu aliphatique, un résidu aromatique, un résidu alcoxy, un résidu aryloxy, un -S-alkyle, un -S-aryle, un -NH-alkyle, un -NH-aryle, un -N alkyle₂, un -N aryle₂, un -NHCO-alkyle ou un -NHCO-aryle, indépendants les uns des autres,

4. Composés selon l'une quelconque des revendications 1 à 3, dans lesquels le substituant R¹ du composé de formule générale (I) est un substituant alkyle avec 6 à 20 atomes de carbone.

5. Procédé pour la production des composés selon l'une quelconque des revendications 1 à 4, par ajout des particules d'oxyde et de l'absorbant organique NIR, ensemble ou séparément, avant, pendant, ou après la polymérisation du polymère thermoplastique transparent, au polymère thermoplastique transparent, ou aux monomères à partir desquels le polymère thermoplastique transparent est polymérisé.

6. Utilisation des composés selon l'une quelconque des revendications 1 à 4, pour la fabrication de plaques, de feuilles, de pellicules, de produits de couverture ou d'autres produits.

7. Procédé pour la fabrication de produits à partir de composés selon l'une quelconque des revendications 1 à 4, impliquant l'usinage des composés par extrusion ou grâce à un moulage par injection.

8. Produits contenant les composés selon l'une quelconque des revendications 1 à 4.

9. Plaques ou feuilles ou pellicules ou produits de couverture, contenant les composés selon l'une quelconque des revendications 1 à 4.
